# DEMANDE DE BREVET EUROPEEN

(11) **EP 4 586 090 A1**
(43) Date de publication de la demande: **16.07.2025**
(21) Numéro de dépôt: 24305048.1
(22) Date de dépôt: 09.01.2024
(51) Int. Cl.: G06F 9/48, G06F 9/54, G06F 9/50

(54) **PROCÉDÉ D'EXÉCUTION D'UNE INSTANCE**

(71) Demandeur: BULL SAS, 78340 Les Clayes-Sous-Bois (FR)
(72) Inventeur: BARBE, MATHIEU, 38170 Seyssinet Pariset (FR)
(74) Mandataire: Cabinet Camus Lebkiri

(57) **Abrégé**

Un aspect de l'invention concerne un procédé (100) d'exécution d'une instance comprenant des étapes de :
- initialisation (110) d'une file de commandes mixte comprenant une file de commandes matérielle et une file de commandes logicielle,
- pour chaque commande d'un ensemble de commandes de l'instance :
- envoi (120) par le processeur à la bibliothèque du périphérique, de ladite chaque commande à ajouter dans la file de commandes mixte,
- ajout (130) par la bibliothèque du périphérique de ladite chaque commande :
-dans la file de commandes matérielle lorsque la file de commandes matérielle allouée possède un emplacement de commande disponible et que la file de commandes logicielle est vide, et
-dans la file de commandes logicielle lorsque la file de commandes matérielle allouée est pleine ou que la file de commandes logicielle comprend une commande précédemment ajoutée et possède un emplacement de commande disponible.

## Description

### DOMAINE TECHNIQUE DE L'INVENTION

Le domaine technique de l'invention est celui de l'informatique.

La présente invention concerne un procédé d'exécution d'une instance et en particulier un procédé d'exécution d'une instance utilisant une file de commandes mixte.

### ARRIERE-PLAN TECHNOLOGIQUE DE L'INVENTION

Une instance désigne un processus qui s'exécute sur un système hôte, par exemple un ordinateur. Une instance peut être par exemple sous deux formes :
- un service système sous forme d'un module noyau s'exécutant en espace protégé sur le système hôte, et
- une application sous forme de processus standard s'exécutant en espace utilisateur sur le système hôte.

Il est de plus en plus courant qu'un ordinateur possède un ou plusieurs périphériques configurés pour décharger les instances transmises par le système hôte. La communication entre un périphérique et son système hôte peut être effectuée à l'aide d'une bibliothèque dite de bas niveau. La bibliothèque du périphérique peut par exemple stockée directement sur un processeur du système hôte. Ainsi, une première partie du processeur peut être dédiée à l'exécution d'une instance et une seconde partie du processeur peut constituer la bibliothèque du périphérique. La bibliothèque du périphérique fournit ainsi des services d'interface du périphérique. Des exemples de tels périphériques sont les cartes graphiques, les disques statiques à semiconducteurs, les disques durs, les cartes réseau ou encore les bus PCI internes. Actuellement, un grand nombre de périphériques sont de type PCle, pour « Peripheral Component Interconnect express » en anglais. Le standard PCle est un standard de bus d'extension utilisé pour les échanges entre le processeur d'un ordinateur et les cartes d'extension. Il est possible de noter qu'il existe différentes versions du standard PCle. L'invention est notamment compatible avec les différentes générations existantes, i.e. de la génération PCle 1.0 à la génération PCle 6.0.

Ainsi, de nombreux périphériques peuvent être pilotés depuis le système hôte à l'aide de files de commandes. Par exemple, dans le cadre d'une tâche de calcul effectuée par un supercalculateur haute performance, plusieurs milliers de périphériques peuvent être pilotés pour effectuer cette tâche de calcul. Un supercalculateur haute performance, aussi appelé HPC pour High Performance Computing en anglais, est un système complexe permettant le traitement de tâches de calcul. Dans ce contexte du calcul haute performance, il est possible d'utiliser un système d'interconnexion, appelé « interconnect » en anglais. Le système d'interconnexion fait référence à un réseau de communication qui connecte diverses unités de traitement, mémoire et éléments de stockage dans un supercalculateur ou un centre de données. Il est par exemple possible de citer le système d'interconnexion « BXI Bull eXascale Interconnect » développé par Atos.

En informatique, une file de commandes est une file d'attente permettant d'ordonner l'exécution des commandes, soit par ordre de priorité, sur la base du premier entré, premier sorti, ou dans n'importe quel ordre qui répond à l'objectif actuel. Ainsi, au lieu d'attendre que chaque commande soit exécutée avant d'envoyer la suivante, l'instance met simplement toutes les commandes dans la file de commandes et continue à exécuter d'autres tâches pendant que la file de commandes est traitée par le périphérique en charge de la file de commandes. Lorsqu'une tâche est déléguée par un programme à un périphérique à l'aide d'une file de commandes, la commande est dite déchargée ou postée. Ce procédé est couramment appelé en anglais « offloading ». Une commande est une instruction répondant à une syntaxe prédéfinie. Cette commande, lorsqu'elle est exécutée par le périphérique, indique à ce dernier une suite d'ordres et d'actions à exécuter. Une commande a généralement une taille de 64 octets. Par exemple, une instance s'exécutant dans un espace utilisateur sur le système hôte peut utiliser un périphérique en construisant au moins une commande et poster la commande dans une file de commandes du périphérique afin que cette commande soit exécutée par le périphérique. De plus, la bibliothèque du périphérique est aussi accessible directement depuis le noyau du système d'exploitation du système hôte. Ainsi, dans un autre exemple, un service du système hôte, sous forme de module noyau, s'exécutant dans un espace protégé du système hôte peut aussi piloter un périphérique d'une manière similaire. Dans un souci de simplicité, nous utiliserons le terme « instance » pour désigner indistinctement un programme s'exécutant dans un espace utilisateur sur le système hôte ou un service du système hôte.

Un périphérique peut utiliser une ou plusieurs files de commandes. Il existe actuellement deux types de files de commandes utilisées par un périphérique. Le premier type est appelé file de commandes matérielle. Une file de commandes matérielle est localisée directement sur le périphérique. Une file de commandes matérielle contient un nombre arbitraire et fixe d'emplacements de commande. Les commandes sont écrites dans la file de commandes matérielle à travers le bus du périphérique. L'utilisation des files de commandes matérielles permet de réduire le temps de latence. En revanche, les files de commandes matérielles ne peuvent contenir qu'une faible quantité de commandes, par exemple 8, 16, 32, 128 ou 1024 commandes, notamment car l'espace mémoire du périphérique est très limité.

Le second type de file de commandes utilisé par un périphérique est appelé file de commandes logicielle. Une file de commandes logicielle est localisée en mémoire vive du système hôte, appelée RAM pour « Random Access Memory » en anglais. L'instance écrit les commandes dans la mémoire vive et le périphérique utilise un procédé d'accès direct à la mémoire, noté DMA pour « Direct Memory Access » en anglais, pour lire ces commandes. L'accès direct à la mémoire est un procédé informatique dans lequel des données circulant de, ou vers, un périphérique sont transférées directement par un contrôleur adapté vers la mémoire principale du système hôte, sans intervention de l'unité de calcul du processeur. L'utilisation des files de commandes logicielles permet de contenir une grande quantité de commandes mais engendre un temps de latence élevé.

Afin d'exécuter une instance avec une grande quantité de commandes déchargées tout en ayant un temps de latence relativement limité, il existe une solution de commandes par lot combinant l'utilisation d'une ou de plusieurs files de commandes matérielles et l'utilisation d'une ou de plusieurs files de commandes logicielles. Cette solution repose sur une commande spéciale qui indique au périphérique qu'un lot de commandes doit être récupéré en mémoire vive. Cette commande de lot indique donc l'adresse mémoire du lot de commandes et le nombre de commandes qui le compose. Le périphérique utilise alors un procédé d'accès direct DMA à la mémoire avec une ou plusieurs requêtes, par exemple de type « PCle read », pour lire les commandes en mémoire vive du système hôte. Lorsque le lot est traité, l'emplacement dans la file de commandes est libéré. Cette solution présente toutefois plusieurs problèmes. Tout d'abord, la bibliothèque du périphérique doit connaître la totalité des commandes composant le lot et les écrire en mémoire vive avant de pouvoir construire et ajouter, aussi appelé « poster », la commande décrivant le lot dans la file de commandes matérielle du périphérique. De plus, la latence de cette solution n'est pas optimale car la première commande du lot est consommée par le périphérique seulement après :
- l'écriture de la dernière commande du lot en mémoire vive,
- l'écriture dans la file de commandes matérielle de la commande de lot, et
- la lecture par le périphérique de la commande en mémoire vive par un procédé d'accès direct DMA.

En résumé, cette solution par lots est adaptée lorsqu'une instance requiert le périphérique de réaliser une opération complexe décomposable en un ou plusieurs lots de commandes. Une opération complexe est par exemple une opération comprenant un très grand nombre de commandes par exemple 1000, 10000, 100000 ou 1000000 de commandes et un lot de commandes pour une opération complexe peut comprendre 200, 500, 1000 ou 5000 commandes. Toutefois, lorsque les opérations demandées ne sont pas prévisibles, il n'est pas possible de construire des lots de commandes. Cette solution par lots n'est donc pas adaptée lorsque les opérations demandées ne sont pas prévisibles.

Il existe donc un besoin de limiter, au moins au partiellement, les problèmes liés à l'utilisation des procédés de l'art antérieur.

### RESUME DE L'INVENTION

L'invention offre une solution aux problèmes évoqués précédemment, en utilisant une file de commandes mixte dynamique. Ainsi, la file de commandes du procédé selon l'invention est dite « mixte » car elle comprend une ou plusieurs files de commandes matérielles localisées sur la mémoire d'un périphérique et une ou plusieurs files de commandes logicielles localisées sur la mémoire vive du système hôte. De plus, cette file de commandes est dite « dynamique ». En effet, lorsque l'instance ajoute des commandes à la file de commandes, la bibliothèque du périphérique effectue dynamiquement, lorsque cela est nécessaire, le basculement entre la ou les files de commandes matérielles et la ou les files de commandes logicielles.

Un aspect de l'invention concerne un procédé d'exécution d'une instance, mis en oeuvre par ordinateur, dans lequel l'ordinateur comprend :
- un processeur configuré pour mettre en oeuvre l'exécution de l'instance,
- un périphérique et une bibliothèque du périphérique configurés pour allouer une file de commandes matérielle, et
- une mémoire vive configurée pour allouer une file de commandes logicielle, le procédé comprenant des étapes de :
   - initialisation d'une file de commandes mixte comprenant la file de commandes matérielle et la file de commandes logicielle, l'initialisation comprenant des sous-étapes de :
      - allocation, par la bibliothèque du périphérique, de la file de commandes matérielle,
      - allocation, en mémoire vive par la bibliothèque du périphérique, de la file de commandes logicielle,
   - pour chaque commande d'un ensemble de commandes de l'instance :
      - envoi par le processeur à la bibliothèque du périphérique, de ladite commande à ajouter dans la file de commandes mixte,
      - ajout par la bibliothèque du périphérique de ladite commande :
         - dans la file de commandes matérielle lorsque la file de commandes matérielle allouée possède un emplacement de commande disponible et que la file de commandes logicielle est vide, et
         - dans la file de commandes logicielle lorsque la file de commandes matérielle allouée est pleine ou que la file de commandes logicielle comprend une commande précédemment ajoutée et possède un emplacement de commande disponible.

Grâce à l'invention, un système hôte voulant exécuter une instance peut dédier la gestion d'un grand nombre de commandes, dites déchargées, tout en conservant une latence optimisée pour les premières commandes. En effet, lorsque le périphérique possède une file de commandes matérielle avec au moins un emplacement de commandes disponibles, le périphérique ajoute la prochaine commande dans la file de commandes matérielle. Si l'exécution de la ou des commandes de la file de commandes matérielle est suffisamment rapide, alors la file de commandes matérielle pourra suffire durant l'entière exécution de l'instance. Toutefois, si l'exécution des commandes de la file de commandes matérielle est plus lente que l'ajout de commandes dans cette file de commandes, alors la file de commandes matérielle est, à un moment donné, pleine. Lorsque la file de commandes matérielle est pleine, l'instance ajoute la prochaine commande dans la file de commandes logicielle.

Outre les caractéristiques qui viennent d'être évoquées dans le paragraphe précédent, le procédé selon un aspect de l'invention peut présenter une ou plusieurs caractéristiques complémentaires parmi les suivantes, considérées individuellement ou selon toutes les combinaisons techniquement possibles :
- le procédé comprend en outre, pour ladite commande, des étapes de :
   - exécution de ladite commande ou d'une autre commande de l'ensemble de commandes de l'instance précédemment ajoutée dans la file de commandes matérielle, et
   - libération dans la file de commandes matérielle de l'emplacement de commande comprenant la commande exécutée,
- l'exécution et la libération sont effectuées pour l'autre commande de l'ensemble de commandes de l'instance précédemment ajoutée dans la file de commandes matérielle et en parallèle de l'envoi et de l'ajout de ladite commande
- la file de commandes matérielle est vide et pour ladite commande, des étapes de :
   - exécution de ladite commande ou d'une autre commande de l'ensemble de commandes de l'instance précédemment ajoutée dans la file de commandes logicielle, et
   - libération dans la file de commandes logicielle de l'emplacement de commande comprenant la commande exécutée,
- l'exécution et la libération sont effectuées pour l'autre commande de l'ensemble de commandes de l'instance précédemment ajoutée dans la file de commandes logicielle et en parallèle de l'envoi et de l'ajout de ladite chaque commande,
- l'exécution de ladite commande ou de l'autre commande de l'ensemble de commandes de l'instance précédemment ajoutée dans la file de commandes logicielle comprend la lecture de ladite commande par un procédé d'accès direct à la mémoire,
- la file de commandes matérielle et la file de commandes logicielle possèdent chacune un pointeur de tête et un pointeur de queue initialisés à zéro lors des sous-étapes d'allocation,
- le pointeur de queue de chaque file de commandes est incrémenté d'un pas lorsque la commande est ajoutée dans la file de commandes correspondante,
- le pointeur de tête de chaque file de commandes est incrémenté d'un pas lorsque la commande de l'ensemble de commandes est libérée dans la file de commandes correspondante,
- chaque file de commandes est vide lorsque la différence entre le pointeur de tête et le pointeur de queue correspondants est égale à zéro, et
- chaque file de commandes respective est pleine lorsque la différence entre le pointeur de queue et le pointeur de tête est égale au nombre d'emplacements de commandes disponibles dans la file de commandes respective,
- le périphérique est un périphérique PCIe,
- la file de commandes matérielle comprend un nombre d'emplacements de commande disponibles inférieur ou égal à 1024 et la file de commandes matérielle comprend un nombre d'emplacements de commande disponibles supérieur à 1000, 10000, 100000 ou 1000000, et
- la file de commandes mixte est partagée entre plusieurs instances.

Un second aspect de l'invention concerne un système configuré pour mettre en oeuvre un procédé selon l'invention, le système comprenant :
- le processeur configuré pour mettre en oeuvre l'exécution de l'instance,
- le périphérique et la bibliothèque du périphérique configurés pour allouer la file de commandes matérielle, et
- une mémoire vive configurée pour allouer une file de commandes logicielle.

Dans un exemple, le système configuré pour mettre en oeuvre un procédé selon l'invention peut être un supercalculateur.

Un troisième aspect de l'invention concerne un programme d'ordinateur comprenant des instructions qui, lorsque le programme est exécuté par un ordinateur, conduisent celui-ci à mettre en oeuvre un procédé selon l'invention.

Un quatrième aspect de l'invention concerne un support de données non-transitoire lisible par ordinateur, sur lequel est enregistré un programme d'ordinateur selon l'invention.

L'invention et ses différentes instances seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre un schéma synoptique illustrant les étapes d'un exemple du procédé selon l'invention.
- La figure 2 montre un schéma synoptique illustrant les sous-étapes d'une première étape de l'exemple du procédé selon l'invention.
- La figure 3 montre une représentation schématique d'un exemple de système configuré pour mettre en oeuvre le procédé selon l'invention.

### DESCRIPTION DETAILLEE

Sauf précision contraire, un même élément apparaissant sur des figures différentes présente une référence unique.

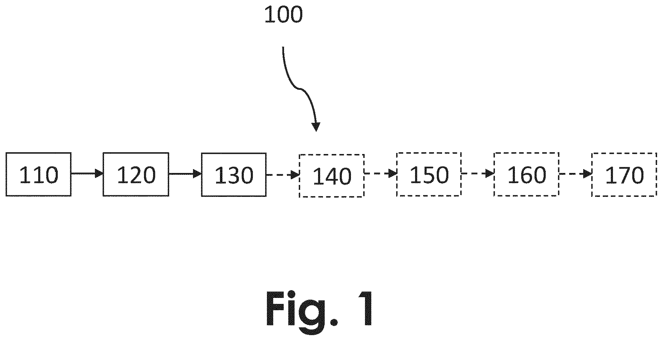

La figure 1 est un schéma synoptique illustrant les étapes d'un exemple du procédé 100 selon l'invention. Les étapes obligatoires de l'exemple du procédé 100 sont indiquées par un rectangle en traits pleins et les étapes facultatives sont indiquées par un rectangle en traits pointillés.

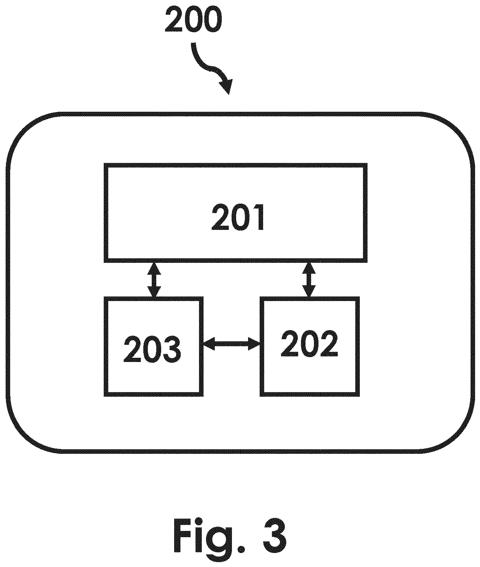

Le procédé 100 est mis en oeuvre par un système tel qu'un ordinateur ou un superordinateur. Le système est adapté pour mettre en oeuvre le procédé 100. En particulier, le système comprend un périphérique et une bibliothèque du périphérique configurés pour allouer une file de commandes matérielle et pour exécuter au moins une commande comprise dans la file de commandes matérielle ou dans la file de commandes logicielle. La bibliothèque du périphérique est un ensemble de fonctions utilitaires, liées à l'utilisation du périphérique, regroupées et mises à disposition afin de pouvoir être utilisées sans avoir à les réécrire. Le périphérique est par exemple de type PCle. L'utilisation d'un périphérique PCle permet un taux de transfert de données important. Par exemple, un périphérique PCle 3.0, i.e. PICe de 3^{ème} génération, a un taux de transfert de données de 8 gigatransferts par seconde. Des périphériques PCle 4.0 et 5.0 ont respectivement un taux de transfert de données de 16 et 32 gigatransferts par seconde. Le système comprend aussi un ou plusieurs processeurs en charge de l'exécution de l'instance. Enfin, le système comprend une mémoire vive configurée pour allouer une file de commandes logicielle. Le système peut comprendre aussi des moyens permettant la communication, notamment l'envoi d'instructions et des commandes de l'instance, entre les différentes entités du système, notamment entre le périphérique, la mémoire vive et le ou les processeurs en charge de l'exécution de l'instance. La figure 3 montre une représentation schématique d'un exemple de système configuré pour mettre en oeuvre le procédé 100. Ainsi, le système 200 comprend au moins un processeur 201, un périphérique 202, une mémoire vive 203. Les moyens de communications sont eux représentés par des flèches à double sens. Ainsi, le système 200 comprend un moyen de communication entre :
- Le au moins un processeur 201 et la mémoire vive 203,
- la bibliothèque de périphérique 203 et le périphérique 202, et
- le périphérique 202 et la mémoire vive 203 via le procédé d'accès direct à la mémoire DMA.

Par « mis en oeuvre par ordinateur », on entend que les étapes, ou pratiquement toutes les étapes du procédé 100, sont exécutées par au moins un ordinateur ou tout autre système similaire. Ainsi, des étapes sont réalisées par l'ordinateur, éventuellement de manière entièrement automatique, ou semi-automatique. Dans des exemples, le déclenchement d'au moins certaines des étapes du procédé peut être effectué par interaction utilisateur-ordinateur. Le niveau d'interaction utilisateur-ordinateur requis peut dépendre du niveau d'automatisme prévu et mis en balance avec la nécessité de mettre en oeuvre les souhaits de l'utilisateur. Dans des exemples, ce niveau peut être défini par l'utilisateur et/ou prédéfini.

Dans un exemple, l'ordinateur mettant en oeuvre le procédé 100 est un supercalculateur, autrement appelé superordinateur. Un supercalculateur est un très grand ordinateur, réunissant plusieurs dizaines de milliers de processeurs, et capable de réaliser un très grand nombre d'opérations de calcul ou de traitement de données simultanées. Pour réaliser autant d'opérations simultanées, les supercalculateurs effectuent les calculs « en parallèle », c'est-à-dire en les répartissant sur différents processeurs. Ceux-ci sont organisés en « grappe » de « noeuds de calcul », connectés par un réseau ultrarapide. Les noeuds de calcul mettent en commun leurs mémoires pour former une mémoire « distribuée » de très grande taille, et sont reliés à des espaces de stockage de plus grande taille encore.

Une première étape 110 du procédé 100 comprend l'initialisation d'une file de commandes mixte. Le terme « mixte » signifie ici que la file de commandes comprend une file de commandes matérielle et une file de commandes logicielle. Ainsi, la file de commandes logicielle est considérée comme une extension de la file de commandes matérielle. Le système 200, durant l'exécution de l'instance, ne gère donc qu'une seule file de commandes mixte. Dans un exemple, compatible avec les exemples précédents, le système 200, durant l'exécution de l'instance, peut gérer plusieurs files de commandes mixtes. Ainsi, dans un exemple, la bibliothèque peut observer sur le périphérique 202 que la file de commande matérielle est pleine. En réponse, la bibliothèque du périphérique 202 peut décider de basculer de la file de commandes matérielle vers la file de commandes logicielle. A l'inverse, dans le même exemple, le périphérique 202 peut effectuer seul le basculement de la file de commandes logicielle vers la file de commandes matérielle. De plus, la file de commandes mixte peut être considérée comme étant dynamique. Le terme « dynamique » signifie ici aussi que la file de commandes mixte dynamique peut avoir un nombre de commandes qui évolue pendant l'exécution de l'instance. Ainsi, à la différence des procédés de l'art antérieur, le procédé 100 n'a pas pour prérequis le regroupement par lots des commandes de l'instance.

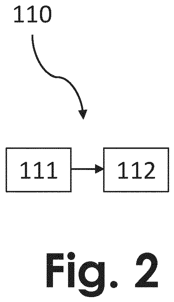

La figure 2 montre un schéma synoptique illustrant les sous-étapes 111 et 112 de la première étape 110 du procédé selon l'invention. La première étape 110 du procédé 100 comprend une première sous-étape 111 d'allocation de la file de commandes matérielle. L'allocation 111 est effectuée en réponse à une instruction envoyée par la bibliothèque du périphérique 202. Une allocation, autrement appelée allocation de mémoire, désigne les techniques et les algorithmes sous-jacents permettant de réserver de la mémoire à une instance pour son exécution. L'allocation de la file de commandes matérielle est effectuée directement sur la mémoire du périphérique 202. Il faut noter qu'étant donné que la taille de la mémoire sur le périphérique 202 est réduite, la file de commandes matérielle peut, dans un exemple, ne contenir que 8, 16, 32, 128 ou 1024 commandes.

La première étape 110 du procédé 100 comprend une seconde sous-étape 112 d'allocation de la file de commandes logicielle. L'allocation 112 est effectuée sur la mémoire vive 203 du système 200 en réponse à une instruction envoyée par la bibliothèque du périphérique 202. La file de commandes logicielle peut comprendre un nombre de commandes variable. Ainsi, la taille de la file de commandes logicielle peut être déterminée à l'initialisation de la file de commandes logicielle. La file de commandes logicielle peut contenir un très grand nombre de commandes, par exemple 1000, 10000, 100000 ou 1000000 de commandes.

Dans un exemple, compatible avec les exemples précédents, la file de commandes mixte initialisée à l'étape 110 est partagée entre plusieurs instances.

Les étapes 120 à 170 du procédé 100 sont réalisées pour chaque commande d'un ensemble de commandes de l'instance. L'ensemble de commandes de l'instance peut par exemple être les 1000, 10000, 100000 ou 1000000 commandes permettant l'exécution de l'instance. Ainsi, l'exécution de l'instance nécessite d'exécuter chaque commande de l'ensemble de commandes de l'instance. Pour chaque itération du procédé 100, une commande courante parmi l'ensemble des commandes de l'instance est traitée dans les étapes 120 à 170 du procédé 100.

La deuxième étape 120 du procédé 100 comprend l'envoi de la commande courante à ajouter dans la file de commandes mixte. L'envoi est effectué en réponse à une instruction envoyée par le processeur 201 à la bibliothèque du périphérique 202.

La troisième étape 130 du procédé 100 comprend l'ajout de la commande courante dans la file de commandes mixte. Lorsque la file de commandes matérielle allouée possède un emplacement de commande disponible et que la file de commandes logicielle est vide, la commande courante est ajoutée dans la file de commandes matérielle. Lorsque la file de commandes matérielle allouée est pleine, l'ajout de commandes est effectué dans la file de commandes logicielle. De plus, lorsque la file de commandes logicielle comprend une commande précédemment ajoutée et possède un emplacement de commande disponible, l'ajout de la commande courante est effectué dans la file de commandes logicielle. Dit autrement, même si la file de commandes matérielle n'est pas pleine mais que la file de commandes logicielle comprend une commande précédemment ajoutée et possède un emplacement de commande disponible, alors l'ajout de la commande courante est effectué dans la file de commandes logicielle. Ainsi, le choix d'ajouter la commande dans la file de commandes matérielle ou la file de commandes logicielle est effectué par la bibliothèque du périphérique 202 en fonction de l'état actuel du périphérique 202. Par exemple, si le périphérique 202 a une charge de travail trop importante pour pouvoir vider, au moins partiellement, la file de commandes matérielle lorsqu'elle est pleine, la bibliothèque du périphérique 202 ajoutera la prochaine commande dans la file de commandes logicielle. Ainsi, ce choix est le plus adapté dans cet exemple puisque la latence aurait de toute manière été importante.

Lorsqu'au moins une commande est dans la file de commandes mixte, cette commande est ensuite exécutée puis libérée. Cette exécution et cette libération peuvent être effectuées en parallèle des étapes d'envoi 120 et d'ajout 130 de la commande courante. Les termes « en parallèle » signifient ici que l'exécution et la libération d'une commande de l'ensemble de commandes de l'instance peut être effectuée en même temps que les étapes d'envoi 120 et d'ajout 130 d'une autre commande de l'ensemble de commandes de l'instance. Il est évident qu'afin d'effectuer l'exécution et la libération d'une commande de l'ensemble de commandes de l'instance, il est nécessaire que cette commande ait été précédemment ajoutée dans la file de commandes mixte. Ainsi, l'exécution et la libération de la commande courante est effectuée après la mise en oeuvre des étapes d'envoi 120 et d'ajout 130 de la commande courante. L'exécution et la libération d'une commande précédemment ajoutée dans la file de commandes mixte peut être effectuée durant la mise en oeuvre des étapes d'envoi 120 et d'ajout 130 de la commande courante.

Le procédé 100 peut ainsi comprendre une quatrième étape 140 optionnelle d'exécution de la commande courante ou d'une commande précédemment ajoutée dans la file de commandes matérielle de la file de commandes mixte. Lorsque la commande a été exécutée, il est ensuite possible, dans une étape 150 optionnelle du procédé 100, de libérer l'emplacement de commande de la file de commandes matérielle correspondant à la commande exécutée.

Dans un exemple, compatible avec les exemples précédents, les étapes 140 et 150 concernent l'exécution et la libération d'une commande précédemment ajoutée. Ces étapes 140 et 150 peuvent être effectuées en parallèle des étapes d'envoi 120 et d'ajout 130 de la commande courante.

Le procédé 100 peut aussi comprendre une sixième étape 160 optionnelle d'exécution de la commande courante ou de la commande précédemment ajoutée dans la file de commandes logicielle de la file de commandes mixte. Lorsque la commande a été exécutée, il est ensuite possible, dans une étape 170 optionnelle du procédé 100, de libérer l'emplacement de commande de la file de commandes logicielle correspondant à la commande exécutée. Les étapes 160 et 170 sont mises en oeuvre lorsque la file de commandes matérielle est vide. Ainsi, l'exécution et la libération des commandes de la file de commandes matérielle est effectuée avant l'exécution et la libération des commandes de la file de commandes logicielle.

Dans un exemple, compatible avec les exemples précédents, l'exécution 160 de ladite chaque commande ou de la commande précédemment ajoutée dans la file de commandes logicielle comprend la lecture de ladite commande par un procédé d'accès direct DMA à la mémoire.

Dans un exemple compatible avec les exemples précédents, les étapes 160 et 170 concernent l'exécution et la libération d'une commande précédemment ajoutée. Ces étapes 160 et 170 peuvent être effectuées en parallèle des étapes d'envoi 120 et d'ajout 130 de la commande courante.

Dans un exemple, compatible avec les exemples précédents, la file de commandes matérielle possède un pointeur de tête et un pointeur de queue et la file de commandes logicielle possède aussi un pointeur de tête et un pointeur de queue. Les pointeurs de tête et de queue de la file de commandes matérielle sont initialisés à zéro lors de la sous-étape 111. Les pointeurs de tête et de queue de la file de commandes logicielle sont initialisés à zéro lors de la sous-étape 112. Les pointeurs de tête et de queue sont notamment utilisés pour savoir combien d'emplacements de commandes sont disponibles dans la file de commande correspondante. Le fonctionnement des pointeurs de tête et de queue de la file de commandes matérielle est identique au fonctionnement des pointeurs de tête et de queue de la file de commandes logicielle. Ainsi, dans un souci de concision, seul le fonctionnement des pointeurs de tête et de queue de la file de commandes matérielle est détaillé dans les paragraphes suivants mais ces détails sont aussi applicables aux pointeurs de tête et de queue de la file de commandes logicielle.

Le pointeur de queue indique l'emplacement de commande dans lequel la commande courante peut être ajoutée. En d'autres termes, le pointeur de queue permet à la bibliothèque du périphérique de savoir où ajouter la prochaine commande de l'ensemble de commandes de l'instance dans la file de commande matérielle. Lorsque la commande est ajoutée à l'étape 130 dans la file de commandes matérielle, le pointeur de queue est incrémenté d'un pas. Le pointeur de tête indique l'emplacement de commande dans lequel la commande courante peut être lue et exécutée. En d'autres termes, le pointeur de tête permet au périphérique de savoir où la prochaine commande de l'ensemble de commandes de l'instance, précédemment ajoutée dans la file de commande matérielle, peut être lue et exécutée. Le pointeur de tête de la file de commandes matérielle est incrémenté d'un pas lorsque la commande de l'ensemble de commandes est libérée dans la file de commandes matérielle à l'étape 150.
A partir des valeurs des pointeurs de tête et de queue, il est possible de calculer le nombre d'emplacements disponibles dans la file de commandes matérielle. Par exemple, la file de commandes matérielle est vide lorsque la différence entre le pointeur de queue et le pointeur de tête est égale à zéro. Par exemple, si le pointeur de queue a une valeur de 38 et le pointeur de tête de 38, alors la file de commandes matérielle est vide. Dans un autre exemple, la file de commandes matérielle est pleine lorsque la différence entre le pointeur de queue et le pointeur de tête est égale au nombre d'emplacements de commandes disponibles dans la file de commandes matérielle. Par exemple, si la file de commandes matérielle contient 32 commandes, que le pointeur de queue a une valeur de 38 et que le pointeur de tête de 6, alors la file de commandes matérielle est pleine. Enfin, le nombre d'emplacements de commande occupés dans la file de commandes matérielle est égal à la différence entre le pointeur de queue et le pointeur de tête de la file de commandes matérielle. Par exemple, si le pointeur de queue a une valeur de 34 et le pointeur de tête de 6, alors la file de commandes matérielle comprend 28 emplacements de commande occupés, donc 28 commandes à exécuter sont dans la file de commandes matérielle. A partir du nombre d'emplacements de commande occupés, il est donc possible d'en déduire le nombre d'emplacements de commande disponibles lorsque le nombre d'emplacements de commandes dans la file de commandes matérielle est connu. Par exemple, si la file de commandes matérielle contient 32 commandes, que le pointeur de queue a une valeur de 34 et que le pointeur de tête de 6, alors la file de commandes matérielle comprend 4 emplacements de commande disponibles.

## Revendications

1. Procédé (100) d'exécution d'une instance, mis en oeuvre par ordinateur, dans lequel l'ordinateur comprend :
- un processeur (201) configuré pour mettre en oeuvre l'exécution de l'instance,
- un périphérique (202) et une bibliothèque du périphérique configurés pour allouer une file de commandes matérielle, et
- une mémoire vive (203) configurée pour allouer une file de commandes logicielle,
le procédé (100) comprenant des étapes de :
- initialisation (110) d'une file de commandes mixte comprenant la file de commandes matérielle et la file de commandes logicielle, l'initialisation comprenant des sous-étapes de :
∘ allocation (111), par la bibliothèque du périphérique, de la file de commandes matérielle,
∘ allocation (112), en mémoire vive (203) par la bibliothèque du périphérique, de la file de commandes logicielle,
- pour chaque commande d'un ensemble de commandes de l'instance :
∘ envoi (120) par le processeur (201) à la bibliothèque du périphérique, de ladite commande à ajouter dans la file de commandes mixte,
∘ ajout (130) par la bibliothèque du périphérique (202) de ladite commande :
- dans la file de commandes matérielle lorsque la file de commandes matérielle allouée possède un emplacement de commande disponible et que la file de commandes logicielle est vide, et
- dans la file de commandes logicielle lorsque la file de commandes matérielle allouée est pleine ou que la file de commandes logicielle comprend une commande précédemment ajoutée et possède un emplacement de commande disponible.

2. Procédé (100) selon la revendication 1 comprenant en outre, pour ladite commande, des étapes de :
- exécution (140) de ladite commande ou d'une autre commande de l'ensemble de commandes de l'instance précédemment ajoutée dans la file de commandes matérielle, et
- libération (150) dans la file de commandes matérielle de l'emplacement de commande comprenant la commande exécutée.

3. Procédé (100) selon la revendication précédente dans lequel l'exécution (140) et la libération (150) sont effectuées pour l'autre commande de l'ensemble de commandes de l'instance précédemment ajoutée dans la file de commandes matérielle et en parallèle de l'envoi (120) et de l'ajout (130) de ladite commande.

4. Procédé (100) selon la revendication 2 ou 3 comprenant en outre, lorsque la file de commandes matérielle est vide et pour ladite commande, des étapes de :
- exécution (160) de ladite commande ou d'une autre commande de l'ensemble de commandes de l'instance précédemment ajoutée dans la file de commandes logicielle, et
- libération (170) dans la file de commandes logicielle de l'emplacement de commande comprenant la commande exécutée.

5. Procédé (100) selon la revendication précédente dans lequel l'exécution (160) et la libération (170) sont effectuées pour l'autre commande de l'ensemble de commandes de l'instance précédemment ajoutée dans la file de commandes logicielle et en parallèle de l'envoi (120) et de l'ajout (130) de ladite chaque commande.

6. Procédé (100) selon la revendication 4 ou 5, dans lequel l'exécution (160) de ladite commande ou de l'autre commande de l'ensemble de commandes de l'instance précédemment ajoutée dans la file de commandes logicielle comprend la lecture de ladite commande par un procédé d'accès direct à la mémoire.

7. Procédé (100) selon l'une quelconque des revendications 4 à 6 dans lequel :
- la file de commandes matérielle et la file de commandes logicielle possèdent chacune un pointeur de tête et un pointeur de queue initialisés à zéro lors des sous-étapes (111, 112) d'allocation,
- le pointeur de queue de chaque file de commandes est incrémenté d'un pas lorsque la commande est ajoutée (130) dans la file de commandes correspondante,
- le pointeur de tête de chaque file de commandes est incrémenté d'un pas lorsque la commande de l'ensemble de commandes est libérée (150, 170) dans la file de commandes correspondante,
- chaque file de commandes est vide lorsque la différence entre le pointeur de queue et le pointeur de tête correspondants est égale à zéro, et
- chaque file de commandes est pleine lorsque la différence entre le pointeur de queue et le pointeur de tête correspondants est égale au nombre d'emplacements de commandes disponibles dans ladite file de commandes.

8. Procédé (100) selon l'une quelconque des revendications précédentes dans lequel le périphérique (202) est un périphérique PCIe.

9. Procédé (100) selon l'une quelconque des revendications précédentes dans lequel la file de commandes matérielle comprend un nombre d'emplacements de commande disponibles inférieur ou égal à 1024 et la file de commandes logicielle comprend un nombre d'emplacements de commande disponibles supérieur à 1000, 10000, 100000 ou 1000000.

10. Procédé (100) selon l'une quelconque des revendications précédentes dans lequel la file de commandes mixte est partagée entre plusieurs instances.

11. Système (200) configuré pour mettre en oeuvre un procédé (100) selon l'une quelconque des revendications précédentes, le système (200) comprenant :
- le processeur (201) configuré pour mettre en oeuvre l'exécution de l'instance,
- le périphérique (202) et la bibliothèque du périphérique configurés pour allouer la file de commandes matérielle, et
- une mémoire vive (203) configurée pour allouer une file de commandes logicielle.

12. Système (200) selon la revendication précédente dans lequel le système (200) est un supercalculateur.

13. Programme d'ordinateur comprenant des instructions qui, lorsque le programme est exécuté par un ordinateur, conduisent celui-ci à mettre en oeuvre un procédé (100) selon l'une quelconque des revendications 1 à 10.

14. Support de données non-transitoire lisible par ordinateur, sur lequel est enregistré un programme d'ordinateur selon la revendication précédente.
